# EUROPEAN PATENT SPECIFICATION

(11) **EP 4 191 115 B1**
(45) Date of publication and mention of the grant of the patent: **23.09.2026**
(21) Application number: 21212589.2
(22) Date of filing: 06.12.2021
(51) Int. Cl.: F16L 57/00, B65D 59/06, E21B 17/00, F16L 55/115

(54) **PROTECTOR ASSEMBLY**
SCHUTZANORDNUNG
ENSEMBLE DISPOSITIF DE PROTECTION

(43) Date of publication of application: 07.06.2023
(73) Proprietor: Tenaris Connections B.V., 1019 GM Amsterdam (NL)
(72) Inventor: CARBALLO, Angel Andrés, 1019 GM Amsterdam (NL); EGGER, Pablo, 1019 GM Amsterdam (NL); ZABALOY, Julian Ignacio, 1019 GM Amsterdam (NL); MANTOVANO, Luciano Omar, 1019 GM Amsterdam (NL); MAZZAFERRO, Gaston Mauro, 1019 GM Amsterdam (NL)
(74) Representative: Boult Wade Tennant LLP

(56) References cited:
- CN-A- 105 947 397
- KR-B1- 101 308 392
- US-A- 4 720 605
- US-A1- 2017 219 123

## Description

The present invention relates to a protector assembly for the end of a pipe. In particular, the present invention relates to a protector assembly for protecting a thread formed on the external surface of the end of a pipe. Embodiments can provide a protector assembly for protecting a thread formed on the external surface of the end of a pipe of a threaded tubular connection.

Protector assemblies are known. Typically, these are simple covers that overlay the end of a pipe. Pipes with external threads and threaded tubular connections are generally used to assemble components, such as pipes, together for use in, for example, an oil well. The components may be assembled together to form strings, such as a drill string or a casing string for insertion into the well. Threaded tubular connections can be used in other contexts as well.

Producers of threaded tubular connections have developed premium threaded connections which have special features such as specific thread geometries, sealing surfaces, and performance enhancing coatings, such as lubricant materials.

Threaded tubular connections generally comprise a pipe with an external thread, also called a male thread, which is to be screwed into a corresponding internal, or female thread, on an adjacent component. It is important that the external thread not be deformed, polluted or damaged from the time they leave the production line to when they are used, and also between two successive uses if the tubular connection is reused. This is especially important in premium threaded connections with special features. It is also important to protect the other features of the connection, such as the sealing surfaces and performance enhancing coatings.

US4720605A describes a closure with improved sealing end surface plates for enclosing connecting portions of a plurality of sizes of a communication cable. The closure includes a sleeve-like closure body divided longitudinally into portions. The two portions are fastened and sealed. Grooves are formed on an inner surface of the closure body at opposite ends thereof to accommodate the sealing end surface plates interposed between the cable and the closure body. Each of the sealing end surface plates includes an annular rubber end plate and a pair of plastic side plates.

US2017/219123A1 describes a pipe pulling technique where an adaptor is attached to the end of the pipe prior to the pipe being pulled underground, for example through a drilled hole.

According to the invention, there is provided a protector assembly according to claim 1.

Such a protector assembly may be advantageously manufactured by a method including the steps of injection moulding the first shell member; and injection moulding the second shell member.

The features of the protector assembly allow the two shell members to be easily manufactured by injection moulding. Since there may be no undercut parts in the two shell members, the shell members can be easily extracted from an injection moulding machine and (automatically) positioned onto a pin, in particular because the shell members can be handled by a pick and place robot from the outside.

The features of the protector assembly create a reliable seal between the first and second shell members because the first cover can form a strong seal with the second longitudinally extending wall by means of the abutment. This is a strong seal due to the rigidity of the second longitudinally extending wall. This strong seal can prevent contaminants from entering the protector assembly which would damage the external thread, or other features of the connection.

In preferable embodiments the second longitudinally extending wall comprises a groove for receiving the first cover to further enhance the strength of the seal. Preferably, there is an interference fit between the first cover and the groove to strengthen the seal.

In further embodiments, the second shell member comprises a second cover which may be complementary to a groove in the first longitudinally extending wall to create a second seal in the same manner as the seal of the first cover. This double seal improves the overall sealing performance of the protector assembly since any contaminants need to pass through two seals to reach the external thread of the pipe. These two covers may be spaced apart longitudinally in order to create a compartment between the first and second covers. The protector assembly may comprise a wirelessly readable memory such as an RFID tag between the two covers. This location for a RFID tag is beneficial as it prevents the RFID tag from becoming lost even if it detaches from the shell member. This is beneficial in use where there is a need to identify pipes quickly and there is little visual indication of the type of pipe.

In further embodiments, the protector assembly may comprise a visual indicia such as a label. The label may be located on an outer surface of the cover which is, in use, exposed to the environment. This is advantageous because it allows for a large label with identifying information to be present because the cover may be a relatively large flat surface.

The threaded portions may, together, form an internal helical thread to match the external thread of the pipe. This external thread may provide a means for fitting the protector assembly to the pipe so that it does not move axially along the pipe. The threaded portion may also provide an extra layer of protection for the external thread on the pipe since it is a close fitting surface engaging the external thread.

In further embodiments, the shell members may comprise complementary projections and recesses which engage with one another when the protector assembly is assembled. This aids alignment of the two shell members and ensures the seal is formed correctly. The shell members may also comprise an external groove in an outer surface. This groove allows a cable tie to be used to secure the protector assembly together, either for a first use or in a second use. Such a method of securing the protector assembly is quick and easy to perform.

According to the invention, there is also provided a protector assembly according to claim 24. Similar advantages as those described in relation to the above protector assembly may apply.

For a better understanding of the invention, and to show how the same may be put into effect, reference will now be made, by way of example only, to the accompanying drawings in which:

### [LIST OF FIGURES]

Figure 1 shows a protector assembly in an assembled configuration;
Figure 2 shows the protector assembly of Figure 1 prior to assembly upon a pipe;
Figure 3 shows a perspective view of a first shell member of the protector assembly of Figure 1;
Figure 4 shows a perspective view of a second shell member the protector assembly of Figure 1;
Figure 5a shows a second embodiment of the protector assemble in an unassembled configuration;
Figure 5b shows the second embodiment of the protector assemble of Figure 5a in an assembled configuration;
Figure 6a shows a cross sectional view of the first embodiment of the protector assembly of Figure 1;
Figure 6b shows a cross sectional view of the second embodiment of the protector assembly of Figures 5a and 5b; and
Figure 6c shows a cross sectional view of a third embodiment of the protector assembly of Figure 1.

### [DETAILED DESCRIPTION]

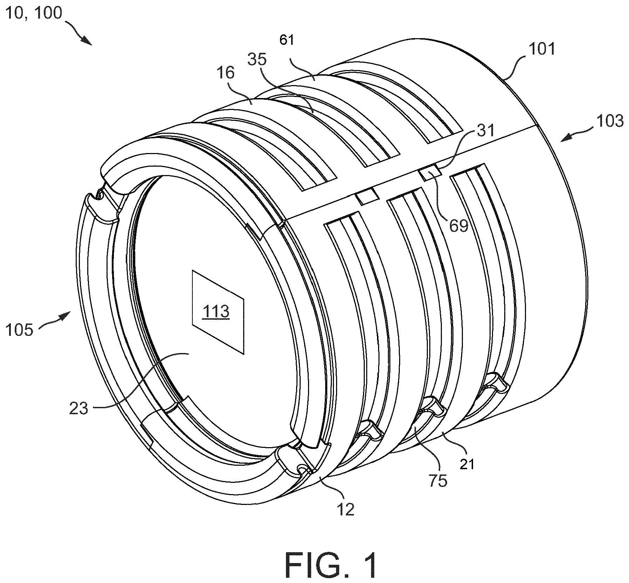

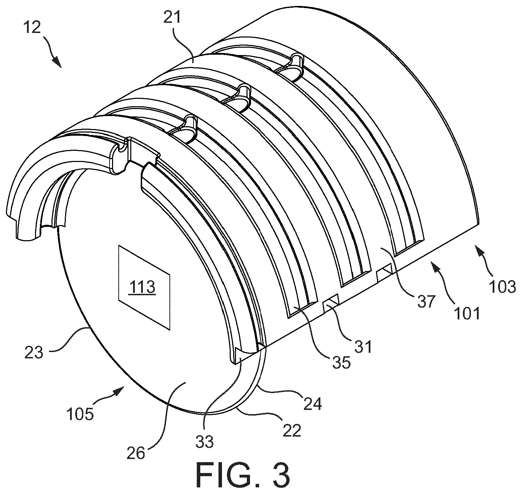

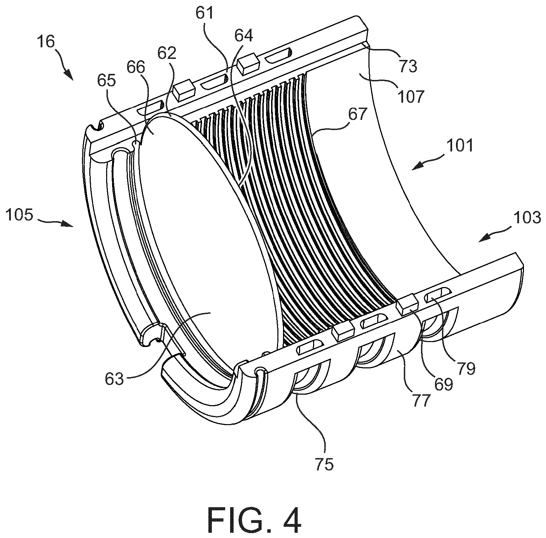

With reference to Figures 1 to 4, a protector assembly 10 in accordance with the present invention is used for protecting a thread 201 formed on an external surface 203 of the end of a pipe 205. The protector assembly 10 comprises a first shell member 12 and a second shell member 16. The first shell member 12 comprises a first longitudinally extending wall 21 and a first cover 23.

The first longitudinally extending wall 21 is a wall that extends in a first longitudinal direction. The first cover 23 may be a member extending from the first longitudinally extending wall 21 in a direction transverse to the first longitudinal direction. The first cover 23 may have an edge 22 separating two opposing major surfaces, an inner surface 24 for facing a the pipe 205 and an outer surface 26 facing away from the pipe 205. Preferably, the two major surfaces 24, 26 are planar.

The first cover 23 is integrally formed with the first longitudinally extending wall 21. The first cover 23 may be longitudinally spaced apart from the end of the first longitudinally extending wall 21. In which case, the first and second shell members 12, 16 may comprise a bumper at the closed end of the protector assembly 10. The second shell member 16 comprises a second longitudinally extending wall 61.

The second longitudinally extending wall 61 is a wall that extends in a second longitudinal direction.

The first and second shell members 12, 16 are configured to be assembled together to form an assembled configuration 100. In the assembled configuration, the first and second longitudinal directions are the same direction. When the assembly is mounted on the end of a pipe 205, the first and second longitudinal directions are aligned with the longitudinal axis of the pipe.

The first and second shell members 12, 16 are configured to cooperate in the assembled configuration 100 to form a tubular enclosure 101 having an open end 103 and an opposing closed end 105. The closed end 105 may be closed by abutment of the first cover 23 with the second longitudinally extending wall 61.

The first cover 23 therefore may be shaped to match the shape of the inner surface of the second longitudinally extending wall 61 where it abuts.

The tubular enclosure 101 is arranged for enclosing a threaded end 207 of the pipe 205. That is, the tubular enclosure 101 may comprise a cross sectional area suitable for surrounding the circumference of the threaded end 207 of the pipe 205 and may have sufficient depth to axially cover at least a portion of the threaded end 207 of the pipe 205. The first and second shell members 12, 16 may be further configured to cooperate in the assembled configuration 100 to form an annular seat 107 for engagement with the circumference of the pipe 205. In particular, the annular seat 107 may be located at the 12065318.HEO.HEO open end 103 of the tubular enclosure 101, wherein the annular seat 107 is adapted to engage an unthreaded circumference of the pipe 205. The annular seat 107 may comprise a cylindrical and/or frustoconical surface, for engagement with the threaded end 207 of the pipe 205 comprising a constant or tapering circular cross section.

As shown in the illustrated embodiment, the first and second longitudinally extending walls 21, 61 may each comprise a hollow body with a semi-circular cross-section, such that, in the assembled configuration 100, the tubular enclosure 101 is cylindrical and/or frustoconical. This embodiment is useful for use with a pipe 205 with a constant or tapering circular cross section. Inner surfaces of the semi-circular hollow bodies of each shell member 12, 16 may cooperate in the assembled configuration 100 to form the annular seat 107. The annular seat 107 may be perpendicular to a longitudinal direction of the tubular enclosure 101. Alternatively, the annular seat 107 may form an angle with the longitudinal direction of the tubular enclosure 101 between 0° and 60°, preferably 45°. In alternative embodiments, the first and second longitudinally extending walls 21, 61 may each comprise a hollow body having a non-semi-circular cross-section (for example, a rectangular or hexagonal cross-section). In such embodiments, the annular seat 107 could be formed by a rib extending from the first and second longitudinally extending walls 21, 61, the rib having an inner edge that defines the annular seat 107.

The second shell member 16 may further comprise a second cover 63. The second cover 63 may have an edge 62 separating two opposing major surfaces, an inner surface 64 for facing the pipe 205 and an outer surface 66 facing away from the pipe 205. Preferably, the two major surfaces are planar.

The second cover 63 may, in the assembled configuration 100, overlap the first cover 23, in particular, in the longitudinal direction. In other words, a surface of the first cover 23 may face a surface of the second cover 63. As shown in the illustrated embodiment, the outer surface 26 of the first cover 23 may face the inner surface 64 of the second cover 63.

The second cover 63 may be arranged to abut the first longitudinally extending wall 21.The second cover 63 therefore is preferably shaped to match the shape of the inner surface of the first longitudinally extending wall 21 where it abuts.

The second cover 63 may be integrally formed with the second longitudinally extending wall 61.

The first and second covers 12, 16 are located at different longitudinal positions along the first and second longitudinally extending walls 21, 61 respectively. The first and second covers 12, 16 may be located such that, in the assembled configuration 100, the first and second covers 12, 16 may be at different longitudinal positions such that a compartment 109 is formed between the first cover 23 and the second cover 63. The first and second covers 12, 16 may be located such that, in the assembled configuration 100, the first and second covers are spaced apart by 0 to 25 mm.

The protector assembly 10 may further comprise a wirelessly readable memory 111. The wirelessly readable memory 111 may be located such that, in the assembled configuration 100, the wirelessly readable memory 111 is disposed between the first and second covers 23, 63. The wirelessly readable memory 111 may be disposed within the compartment 109. The wirelessly readable memory 111 may be attached to the first cover 23 or the second cover 63. The wirelessly readable memory 111 may be a RFID tag. Due to its location within the compartment 109, the wirelessly readable memory 111 can be protected. The wirelessly readable memory 111 can be protected from being dislodged from the rest of the protector assembly 10 by external knocks or internal collisions (e.g., a collision with the pipe 205 during mounting shell members 12, 16 to the pipe 205). This can prevent the wirelessly readable memory 111 from becoming lost.

The protector assembly 10 may further comprise a visual indicia 113. The visual indicia 113 may be located on an outer surface of the cover that is furthest away from the open end 103 such that, in the assembled configuration 100, the visual indicia 113 is exposed to the environment. In an embodiment in which the first cover 23 is furthest away from the open end 103, the visual indicia 113 may be located on the outer surface 26 of the first cover 23. In an embodiment in which the second cover 63 is furthest away from the open end 103, the visual indicia 113 may be located on the outer surface 66 of the second cover 63 (for example, that shown in Figure 1). The visual indicia 113 may be a label, such as an information sheet adhered to the outer surface.

The second longitudinally extending wall 61 may comprise a first groove 65 for receiving the first cover 23. The first groove 65 and the first cover 23 may engage so as to radially interfere in the assembled configuration. Alternatively, the first groove 65 and the first cover 23 may engage to form a clearance fit. Preferably, the first groove 65 engages the first cover 23 along its entire free edge.

The first cover 23 may have a circular cross section. The first groove 65 may be an arc-shaped groove.

The first longitudinally extending wall 21 may comprises a second groove (not shown) for receiving the second cover 63. The second groove and the second cover 63 may engage so as to interfere in the assembled configuration. Alternatively, the second groove and the second cover 63 may engage to form a clearance fit. Preferably, the second groove engages the second cover 63 along its entire free edge.

The second cover 63 may have a circular cross section. The second groove may be an arc-shaped groove. In other words, the first and second covers 23, 63 may each have a circular cross section and the first and second grooves 65 of each of the first and second shell members 12, 16 may each be an arc-shaped groove complementary with the associated cover 23, 63 of the opposing shell member.

The first cover 21 may comprise a solid continuous cover. The second cover 61 may comprise a solid continuous cover. The first cover 21 or the second cover 61 may alternatively comprise an air-hole or perhaps be formed as a grid. The first cover 21 and/or the second cover 61 may have any form suitable for making compartment 109 and/or containing the wireless visual memory 111.

The first and second shell members 12, 16 each comprise an internal threaded portion 27, 67 for engaging the external thread 201 of the pipe 205. The internal threaded portions 27, 67 may axially restrain the protector assembly 10 with respect to the pipe 205. The internal threaded portions 27, 67 may also form a close protective cover for the external thread 201 of the pipe 205. The internal threaded portions 27, 67 may comprise a tapered thread for engaging a tapered external thread 201 of the pipe 205. In the assembled configuration 100, the internal threaded portions 27, 67 of each shell member 12, 16 may collectively form a helical thread. The internal threaded portions 27, 67 may collectively form a continuous helical thread. Alternatively, the internal threaded portions 27, 67 may collectively form a thread which is interrupted and/or has a different profile on each member.

The first shell member 12 may comprise at least one projection and the second shell member 16 may comprise at least one complementary recess. In the assembled configuration 100, the projection of the first shell member 12 may penetrate and engage the recess of the second shell member 16. Additionally, the second shell member 16 may comprise at least one projection 69 and the first shell member 12 may comprise at least one complementary recess 31. In the assembled configuration 100, the projection 69 of the second shell member 16 may penetrate and engage the recess 31 of the first shell member 12. In other words, each shell member 12, 16 may comprise at least one projection 69 and each shell member 12, 16 may comprise at least one complementary recess 31 wherein, in the assembled configuration 100, the projections 69 of each shell member 12, 16 engage the recesses 31 of the corresponding shell member 16, 12. As shown in the illustrated embodiment, the second shell member 16 may comprise four projections 69 and the first shell member 12 may comprise four complementary recesses 31. The projections 69 and recesses 31 may be located such that an equal number are located on opposite sides of the tubular enclosure 101. As shown in the illustrated embodiment, there may be two projections 69 and recesses 31 located on one side of the tubular enclosure 101 and a further two projections 69 and recesses 31 located on the opposite side of the tubular enclosure 101.

One of the shell members 12, 16 may comprise an flange 33 along at least one edge of its longitudinally extending wall 21, 61 and the other of the shell members 16, 12 may comprise a shoulder 73 along at least one edge of its longitudinally extending wall 61, 21 such that, in the assembled configuration 100, the flange 33 abuts the shoulder 73. In particular, the flange 33 is provided along a longitudinal edge of the longitudinally extending wall 21, and the shoulder 73 is provided along a longitudinal edge of the longitudinally extending wall 61. In the illustrated embodiment, the flange 33 is formed on the first longitudinally extending wall 21 of the first shell member 12, and the shoulder 73 is formed on the second longitudinally extending wall 61 of the second shell member 16. In alternative embodiments, the flange 33 and the shoulder 73 could be formed on the alternative longitudinally extending wall 61, 21.

Each shell member 12, 16 may comprise an external groove 35, 75 in an outer surface 37, 77 opposite to the tubular enclosure 101 for receiving a cable tie. The external grooves 35, 75 are aligned so as to be continuous about the outer perimeter of the protector assembly 10 in the assembled configuration 100.

Alternatively, the external groove 35, 75 may be used for receiving another form of securing means, such as strengthening hoops, barrel hoops, plastic straps and or packing belts. The second shell member 16 may comprise a tie recess 79 for passing cable ties therethrough. The tie recess 79 may be a hole through the second longitudinally extending wall 61 allowing, in the assembled configuration 100, communication between the external groove 35 in the first shell member 12 and the external groove 75 in the second shell member 16.

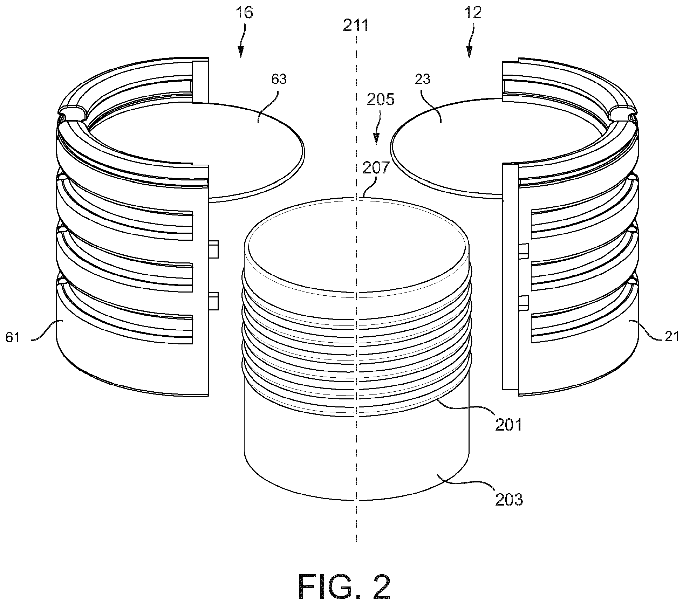

A method of assembling the protector assembly 10 on the end of the pipe 205 is now described with reference to Figure 2. The first and second shell members 12, 16 are brought into proximity with the pipe 205 on opposite sides such that the first and second longitudinally extending walls 21, 61 are arranged along the longitudinal axis 211 of the pipe 205. The first and second shell members 12, 16 are assembled together such that the tubular enclosure 101 is formed around the end of the pipe 205. That is, the three components are assembled together, with the first and second shell members 12, 16 meeting one another around the pipe 205, rather than the protector assembly 10 being separately assembled and then having the pipe 205 inserted therein.

When assembled, the longitudinal axis of the first longitudinally extending wall 21, the longitudinal axis of the second longitudinally extending wall 61, and the longitudinal axis 211 of the pipe 205 are aligned.

The closed end 103 is located at the outermost end of the pipe 205 and a portion of the pipe 205 is located within the open end 103. During assembly, the first cover 23 abuts against the second longitudinally extending wall 61 to form the closed end 103. During assembly, the annular seat 107 engages the pipe 205.

If the second cover 63 is present, during assembly the second cover 63 abuts against the first longitudinally extending wall 21.

If the first and second grooves 65 are present, during assembly the first cover 21 engages the first groove 65 and the second cover 61 engages the second groove.

During assembly the internal threaded portions 27, 67 can engage with the external thread 201 of the pipe 205. The engagement axially restrains the protector assembly 10 with respect to the pipe 205 and protects the external thread 201 of the pipe 205 by forming a close seal. Optionally, although less preferably, in the assembled configuration 100, the internal threaded portions 27, 67 of each shell member 12, 16 may be screwed onto the thread of the pipe 205 in order to mount the protector assembly 10 on the end of the pipe 205. This can assist the engagement of the internal threads of the protector assembly with the external thread 201 of the pipe 205.

If the projections 69 and recesses 31 are present, during assembly they engage to improve alignment of the first and second shell members 12, 16. If the flange 33 and shoulder 73 are present, during assembly they engage to improve alignment of the first and second shell members 12, 16.

If the wirelessly readable memory 111 is present, upon assembly it is enclosed between the first and second covers 23, 63. In particular, the memory 111 may, during assembly, be attached to outer surface of the cover that is to be arranged closest to the open end of the tubular enclosure. Therefore, upon assembly, the wirelessly readable memory 111 is protected within the compartment 109 and it cannot be dislodged by external knocks or internal collisions.

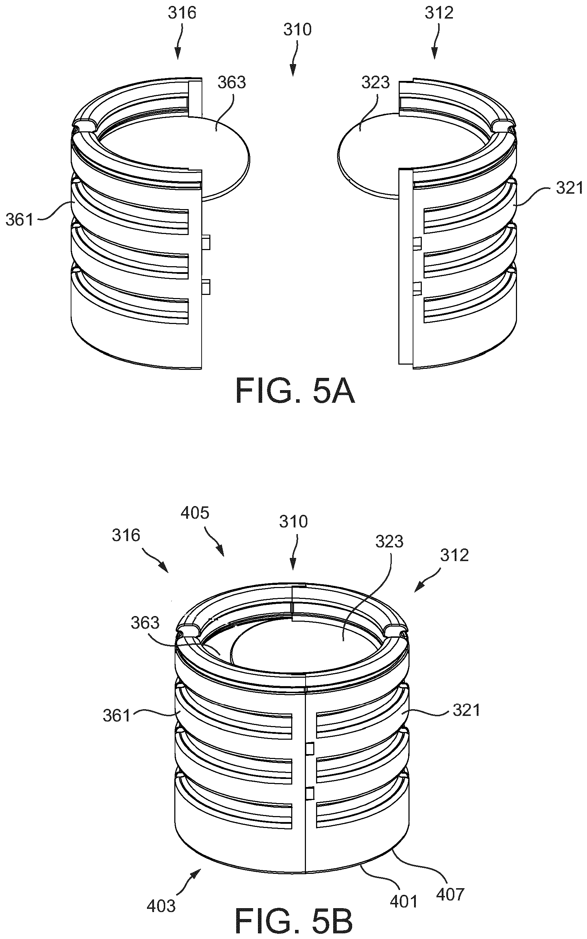

In a further embodiment of the present invention shown in Figures 5a and 5b, a protector assembly 310 is used for protecting a thread 201 formed on the external surface 203 of the end of a pipe 205. The protector assembly 310 comprises a first shell member 312 and a second shell member 316. The first shell member 312 comprises a first longitudinally extending wall 321 and a first cover 323. The second shell member 316 comprises a second longitudinally extending wall 361 and a second cover 363.

The first and second shell members 312, 316 are configured to assemble together to form an assembled configuration 400. The first and second shell members 312, 316 are configured to cooperate in the assembled configuration 400 to form a tubular enclosure 401 having an open end 403 and an opposing covered end 405. The tubular enclosure 401 is arranged for enclosing the threaded end 207 of the pipe 205. The tubular enclosure 401 may be further configured to cooperate in the assembled configuration 400 to form an annular seat 407 for engagement with the circumference of the pipe 205. The covered end 405 is covered by the first and second covers 323, 363. The first and second covers 323, 363 are at different longitudinal positions. The first and second covers 323, 363 overlap such that a major surface of the first cover 323 faces a major surface of the second cover 363, so that the first and second covers 323, 363 thereby form a compartment 409 therebetween. The compartment can be used to hold a RFID tag.

The protector assembly 310 may be further configured such that, in the assembled configuration 400, the first cover 323 extends proximal to the second longitudinally extending wall 361 and the second cover 363 extends proximal to the first longitudinally extending wall 321. As shown in the illustrated embodiment, it is not necessary that the first cover 323 abuts the second longitudinally extending wall 361 or that the second cover 363 abuts the first longitudinally extending wall 321. For example, some or all of the edge of the first cover 323 may be spaced from the second longitudinally extending wall 361 and/or some or all of the edge of the second cover 363 may be spaced from the first longitudinally extending wall 321.

In this context, "proximal to" means "situated close to".

In particular, the first cover 323 may be spaced from the second longitudinally extending wall 361, leaving a first gap between the first cover 323 and the second longitudinally extending wall 361 and/or the second cover 363 may be spaced from the first longitudinally extending wall 321 by a second gap between the second cover 363 and the first longitudinally extending wall 321. Said first and second gap being measured in the plane of the surface of the respective cover. More in particular, the first gap and/or the second gap is small enough to prevent the RFID tag 111 passing through the gap. Specifically, the first gap and/or the second gap is smaller than two of the dimensions (length, width, thickness) of a RFID tag 111 located between the first and second covers. As such, loss of the RFID tag 111 can be prevented. Even more in particular, the first and/or second gap is 20% of the radius of the tubular enclosure 401.

For example, the first cover 323 may be spaced from the second longitudinally extending wall 361 by a gap that is smaller than a first distance, and/or the second cover 363 may be spaced from the first longitudinally extending wall 321 by a gap that is smaller than the first distance. The first distance may be, for example, the radius of the tubular enclosure 401. In some cases, the first distance may be 20% of the radius of the tubular enclosure 401.

The first shell member 312 may further comprise a closure member extending from the first cover 323 for closing the tubular enclosure 401. The closure member may be a piece of material extending perpendicularly from the first cover 323 to engage the surface of the second cover 363 in the assembled configuration 400. The closure member can close the tubular enclosure 401 to prevent the RFID tag from becoming lost and can prevent pollutants from entering the tubular enclosure 401 through the covered end 405.

The features described in connection with the first embodiment of figures 1 to 4 - such as the wirelessly readable memory 111; the visual indicia 113; the internal threaded portions 27, 67; the projections 69; the recesses 31; the flange 33; the shoulder 73; the external grooves 35, 75; the tie recess 79 - can be implemented into the second embodiment of figure 5 in the same manner as initially described in connection with the first embodiment, whether in combination or individually.

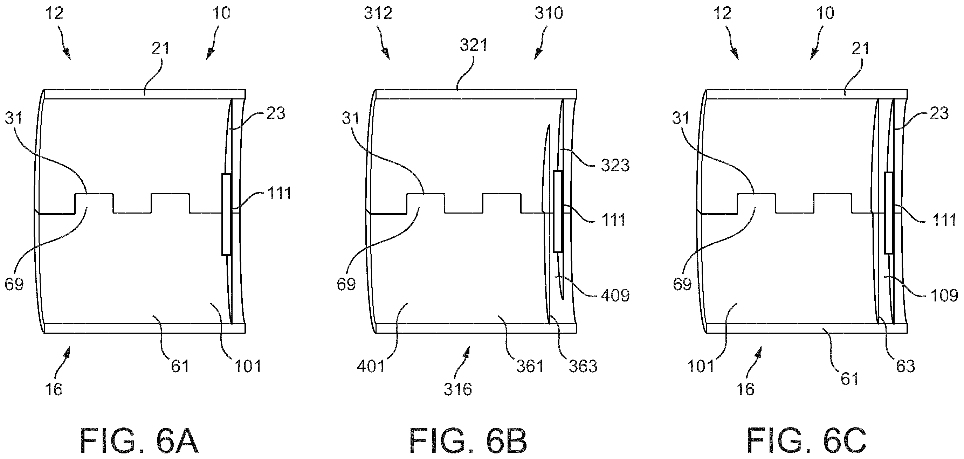

Figures 6a to c show cross sectional views of three embodiments of the protector assembly 10, 310.

In the first embodiment of Figure 6, which corresponds to the first embodiment described herein with reference to Figures 1 to 4, a first cover 23 is provided, extending across the entire cross-section, so as to close the tubular enclosure 101. The wireless readable memory 111 is attached to the inner surface 24 of the first cover 23.

In the embodiment of Figure 6b, which corresponds to the second embodiment described herein with reference to Figures 5a and 5b, two covers 323, 363 are provided, extending only part of the way across the cross-section, such that the two covers 323, 363 collectively close the tubular enclosure 401. The covers 323, 363 are spaced apart to define a compartment 409 therebetween for housing the wireless readable memory 111, which is within the compartment 409 and attached to one of the covers (in the illustration, the wireless readable memory 111 is attached to the first cover 323).

The third embodiment of Figure 6c corresponds to the first embodiment described herein with reference to Figures 1 to 4, except that two covers 23, 63 are provided, at least one of the covers extends across the entire cross-section, so as to close the tubular enclosure. The covers are spaced apart to define a compartment 109 therebetween for housing the wireless readable memory 111, which is within the compartment 109 and attached to one of the covers (in the illustration, the wireless readable memory 111 is attached to the first cover 323).

Although the first and second embodiments have described protector assemblies 10, 310 comprising two shell members, protector assemblies in accordance with the present invention may comprise three or more shell members so arranged to collectively form the tubular enclosure 101, 401. The shell members may be a first, second and third shell member. An embodiment with more shell members can be easier to remove from the pipe 205.

## Claims

1. A protector assembly (10) for protecting a thread (201) formed at the end of a pipe (205), the protector assembly (10) comprising at least a first shell member (12) and a second shell member (16), wherein:
the first shell member (12) comprises a first longitudinally extending wall (21) and a first cover (23);
the second shell member (16) comprises a second longitudinally extending wall (61); and
the shell members (12, 16) are configured to cooperate in an assembled configuration (100) to form:
a tubular enclosure (101) having an open end (103) and an opposing closed end (105), the tubular enclosure (101) arranged for enclosing the threaded end (207) of the pipe (205),
wherein the closed end (105) is closed by the abutment of the first cover (23) with the second longitudinally extending wall (61),
wherein the first cover (23) is integrally formed with the first longitudinally extending wall (21);
**characterised in that**:
each shell member (12, 16) comprises an internal threaded portion (27, 67) for engaging the external thread (201) of the pipe (205).

2. The protector assembly (10) of claim 1, wherein the second longitudinally extending wall (61) comprises a first groove (65) for receiving the first cover (23).

3. The protector assembly of claim 1 or 2, wherein the second shell member (16) comprises a second cover (63) arranged to abut the first longitudinally extending wall (21).

4. The protector assembly (10) of claim 3, wherein the first longitudinally extending wall (21) comprises a second groove for receiving the second cover (63).

5. The protector assembly (10) of claim 3 or 4, wherein the second cover (63) is integrally formed with the second longitudinally extending wall (61).

6. The protector assembly (10) of any of claims 3 to 5, wherein, in the assembled configuration (100), the first and second covers (23, 63) are located at different longitudinal positions such that a compartment (109) is formed between the first cover (23) and the second cover (63).

7. The protector assembly (10) of any of claims 3 to 6, wherein in the assembled configuration (100), the first and second covers (23, 63) are spaced apart by 0 to 25 mm.

8. The protector assembly (10) of any of claims 2 to 7, wherein the first groove (65) in the second longitudinal extending wall (61) and the first cover (23) engage so as to interfere in the assembled configuration (100).

9. The protector assembly (10) of claim 8, as dependent upon claim 4, wherein the second groove in the first longitudinal extending wall (21) and the second cover (63) engage so as to interfere in the assembled configuration (100).

10. The protector assembly (10) of any preceding claim, wherein the internal threaded portion (27, 67) comprises a tapered thread for engaging a tapered external thread (201) of the pipe (205).

11. The protector assembly (10) of any preceding claim, wherein, in the assembled configuration (100), the internal threaded portions (27, 67) of each shell member (12, 16) collectively form a helical thread.

12. The protector assembly (10) of any preceding claim, wherein the first shell member (12) comprises at least one projection and the second shell member (16) comprises at least one complementary recess wherein, in the assembled configuration (100), the projection of the first shell member (12) penetrates and engages the recess of the second shell member (16).

13. The protector assembly (10) of any preceding claim, wherein each shell member (12, 16) comprises at least one projection (69) and each shell member (16, 12) comprises at least one complementary recess (31) wherein, in the assembled configuration (100), the projections (69) of each shell member (12, 16) engages the recess (31) of the corresponding shell member (16, 12).

14. The protector assembly (10) of any preceding claim, wherein one of the shell members (12, 16) comprises a flange (33) along at least one edge of its longitudinally extending wall (21, 61) and the other of the shell members (16, 12) comprises a shoulder (73) along at least one edge of its longitudinally extending wall (61, 21) such that, in the assembled configuration (100), the flange (33) abuts the shoulder (73).

15. The protector assembly (10) of any preceding claim, wherein the longitudinally extending wall (21, 61) of each shell member (12, 16) comprises a hollow body with an arcuate cross-section, such that, in the assembled configuration (100), the tubular enclosure (101) is cylindrical and/or frustoconical.

16. The protector assembly (10) of any preceding claim, wherein the shell members (12, 16) are configured to cooperate in an assembled configuration (100) to form an annular seat (107) for engagement with the circumference of the pipe (205).

17. The protector assembly (10) of claim 16 as dependent upon claim 15, wherein inner surfaces of the semi-circular hollow bodies of each shell member (12, 16) cooperate in the assembled configuration (100) to form the annular seat (107).

18. The protector assembly (10) of any of claims 2 to 17, wherein the first cover (23) has a circular cross section and the first groove (65) of the second shell member (16) is an arc-shaped groove.

19. The protector assembly (10) of claim 18 as dependent upon claim 4, wherein the first and second covers (23, 63) each have a circular cross section and the first and second grooves (65) each are an arc-shaped groove complementary with the associated cover (63, 23) of the opposing shell member (16, 12).

20. The protector assembly (10) of any preceding claim, wherein each shell member (12, 16) comprises an external groove (35, 75) in an outer surface (37, 77) opposite to the tubular enclosure (101) for receiving a cable tie.

21. The protector assembly (10) of any of claims 3 to 20, further comprising a wirelessly readable memory (111) located such that, in the assembled configuration (100), the wirelessly readable memory (111) is disposed between the first and second covers (23, 63).

22. The protector assembly (10) of any preceding claim, further comprising a visual indicia (113), the visual indicia (113) located on an outer surface of the cover (23) that is furthest away from the open end (103) such that, in the assembled configuration (100), the visual indicia (113) is exposed to the environment.

23. The protector assembly (10) of any preceding claim, wherein the first cover (23) is longitudinally spaced apart from the end of the first longitudinally extending wall (21).

24. A protector assembly (310) for protecting a thread (201) formed at the end of a pipe (205), the protector assembly (310) comprising at least a first shell member (312) and a second shell member (316), wherein:
the first shell member (312) comprises a first longitudinally extending wall (321) and
a first cover (323);
the second shell member (316) comprises a second longitudinally extending wall (361) and a second cover (363); and
the shell members (312, 316) are configured to cooperate in an assembled configuration (400) to form:
a tubular enclosure (401) having an open end (403) and an opposing covered end (405), the tubular enclosure (401) arranged for enclosing the threaded end of the pipe (205),
wherein the first and second covers (323, 363) overlap such that a surface of the first cover (323, 363) faces a surface of the second cover (363),
wherein the first cover (323) is integrally formed with the first longitudinally extending wall (321);
**characterised in that**
each shell member (12, 16) comprises an internal threaded portion (27, 67) for engaging the external thread (201) of the pipe (205).

25. The protector assembly (310) of claim 24, wherein:
the covered end (405) is covered by the first and second covers (323, 363);
the first and second covers (323, 363) are at different longitudinal positions; and
the first and second covers (323, 363) form a compartment (409) therebetween for containing a RFID tag.

26. The protector assembly (310) of claim 24 or claim 25, wherein in the assembled configuration (400), the first cover (323) extends proximal to the second longitudinally extending wall (361) and the second cover (363) extends proximal to the first longitudinally extending wall (321).

27. The protector assembly (310) of any one of claims 24 to 26, wherein the first shell member (312) further comprises a closure member extending longitudinally from the first cover (323) for closing the tubular enclosure (401).

28. The protector assembly (310) of any one claims 24 to 27, wherein the shell members (312, 316) are configured to cooperate in the assembled configuration (400) to form an annular seat (407) for engagement with the circumference of the pipe (205).

## Patentansprüche

1. Schutzanordnung (10) zum Schützen eines am Ende eines Rohres (205) ausgebildeten Gewindes (201), wobei die Schutzanordnung (10) mindestens ein erstes Mantelelement (12) und ein zweites Mantelelement (16) umfasst, wobei:
das erste Mantelelement (12) eine erste, sich in Längsrichtung erstreckende Wand (21) und eine erste Abdeckung (23) umfasst;
das zweite Mantelelement (16) eine zweite, sich in Längsrichtung erstreckende Wand (61) umfasst; und
die Mantelelemente (12, 16) so konfiguriert sind, dass sie in einer zusammengebauten Konfiguration (100) zusammenwirken, um Folgendes zu bilden:
ein rohrförmiges Gehäuse (101) mit einem offenen Ende (103) und einem gegenüberliegenden geschlossenen Ende (105), wobei das rohrförmige Gehäuse (101) zum Umschließen des Gewindeendes (207) des Rohrs (205) ausgelegt ist,
wobei das geschlossene Ende (105) durch das Aneinanderliegen der ersten Abdeckung (23) mit der zweiten, sich in Längsrichtung erstreckenden Wand (61) verschlossen ist,
wobei die erste Abdeckung (23) einstückig mit der ersten sich in Längsrichtung erstreckenden Wand (21) ausgebildet ist;
**dadurch gekennzeichnet, dass**:
jedes Mantelelement (12, 16) einen Innengewindeabschnitt (27, 67) zum Eingriff mit dem Außengewinde (201) des Rohres (205) umfasst.

2. Schutzanordnung (10) nach Anspruch 1, wobei die zweite sich in Längsrichtung erstreckende Wand (61) eine erste Nut (65) zum Aufnehmen der ersten Abdeckung (23) umfasst.

3. Schutzanordnung nach Anspruch 1 oder 2, wobei das zweite Mantelelement (16) eine zweite Abdeckung (63) umfasst, die so ausgelegt ist, dass sie an der ersten sich in Längsrichtung erstreckenden Wand (21) anliegt.

4. Schutzanordnung (10) nach Anspruch 3, wobei die erste sich in Längsrichtung erstreckende Wand (21) eine zweite Nut zum Aufnehmen der zweiten Abdeckung (63) umfasst.

5. Schutzanordnung (10) nach Anspruch 3 oder 4, wobei die zweite Abdeckung (63) einstückig mit der zweiten sich in Längsrichtung erstreckenden Wand (61) ausgebildet ist.

6. Schutzanordnung (10) nach einem der Ansprüche 3 bis 5, wobei, in der zusammengebauten Konfiguration (100), die erste und die zweite Abdeckung (23, 63) an unterschiedlichen Längspositionen angeordnet sind, sodass zwischen der ersten Abdeckung (23) und der zweiten Abdeckung (63) ein Fach (109) gebildet wird.

7. Schutzanordnung (10) nach einem der Ansprüche 3 bis 6, wobei, in der zusammengebauten Konfiguration (100), die erste und zweite Abdeckung (23, 63) einen Abstand von 0 bis 25 mm voneinander aufweisen.

8. Schutzanordnung (10) nach einem der Ansprüche 2 bis 7, wobei die erste Nut (65) in der zweiten sich in Längsrichtung erstreckenden Wand (61) und die erste Abdeckung (23) so in der zusammengebauten Konfiguration (100) ineinandergreifen, dass sie eine Interferenz aufweisen.

9. Schutzanordnung (10) nach Anspruch 8, wenn abhängig von Anspruch 4, wobei die zweite Nut in der ersten sich in Längsrichtung erstreckenden Wand (21) und die zweite Abdeckung (63) in der zusammengebauten Konfiguration (100) so ineinandergreifen, dass sie eine Interferenz aufweisen.

10. Schutzanordnung (10) nach einem der vorhergehenden Ansprüche, wobei der Innengewindeabschnitt (27, 67) ein Kegelgewinde zum Eingriff mit einem Kegelaußengewinde (201) des Rohres (205) aufweist.

11. Schutzanordnung (10) nach einem der vorhergehenden Ansprüche, wobei in der zusammengebauten Konfiguration (100) die Innengewindeabschnitte (27, 67) jedes Mantelelements (12, 16) zusammen ein spiralförmiges Gewinde bilden.

12. Schutzanordnung (10) nach einem der vorhergehenden Ansprüche, wobei das erste Mantelelement (12) mindestens einen Vorsprung und das zweite Mantelelement (16) mindestens eine komplementäre Aussparung umfasst, wobei in der zusammengebauten Konfiguration (100) der Vorsprung des ersten Mantelelements (12) die Aussparung des zweiten Mantelelements (16) durchdringt und mit ihr in Eingriff kommt.

13. Schutzanordnung (10) nach einem der vorhergehenden Ansprüche, wobei jedes Mantelelement (12, 16) mindestens einen Vorsprung (69) und jedes Mantelelement (16, 12) mindestens eine komplementäre Aussparung (31) umfasst, wobei in der zusammengebauten Konfiguration (100) die Vorsprünge (69) jedes Mantelelements (12, 16) in die Aussparung (31) des entsprechenden Mantelelements (16, 12) eingreifen.

14. Schutzanordnung (10) nach einem der vorhergehenden Ansprüche, wobei eines der Mantelelemente (12, 16) einen Flansch (33) entlang mindestens einer Kante seiner sich in Längsrichtung erstreckenden Wand (21, 61) umfasst und das andere der Mantelelemente (16, 12) eine Schulter (73) entlang mindestens einer Kante seiner sich in Längsrichtung erstreckenden Wand (61, 21) umfasst, so dass in der zusammengebauten Konfiguration (100) der Flansch (33) an die Schulter (73) anliegt.

15. Schutzanordnung (10) nach einem der vorhergehenden Ansprüche, wobei die sich in Längsrichtung erstreckende Wand (21, 61) jedes Mantelelements (12, 16) einen Hohlkörper mit bogenförmigem Querschnitt umfasst, sodass das rohrförmige Gehäuse (101) in der zusammengebauten Konfiguration (100) zylindrisch und/oder kegelstumpfförmig ist.

16. Schutzanordnung (10) nach einem der vorhergehenden Ansprüche, wobei die Mantelelemente (12, 16) so konfiguriert sind, dass sie in einer zusammengebauten Konfiguration (100) zusammenwirken, um einen ringförmigen Sitz (107) für den Eingriff mit dem Umfang des Rohres (205) zu bilden.

17. Schutzanordnung (10) nach Anspruch 16, wenn abhängig von Anspruch 15, wobei die Innenflächen der halbkreisförmigen Hohlkörper jedes Mantelelements (12, 16) in der zusammengebauten Konfiguration (100) zusammenwirken, um den ringförmigen Sitz (107) zu bilden.

18. Schutzanordnung (10) nach einem der Ansprüche 2 bis 17, wobei die erste Abdeckung (23) einen kreisförmigen Querschnitt aufweist und die erste Nut (65) des zweiten Mantelelements (16) eine bogenförmige Nut ist.

19. Schutzanordnung (10) nach Anspruch 18, wenn abhängig von Anspruch 4, wobei die erste und zweite Abdeckung (23, 63) jeweils einen kreisförmigen Querschnitt aufweisen und die erste und zweite Nut (65) jeweils eine bogenförmige Nut sind, die komplementär zur zugeordneten Abdeckung (63, 23) des gegenüberliegenden Mantelelements (16, 12) ist.

20. Schutzanordnung (10) nach einem der vorhergehenden Ansprüche, wobei jedes Mantelelement (12, 16) eine äußere Nut (35, 75) in einer Außenfläche (37, 77) gegenüber dem rohrförmigen Gehäuse (101) zur Aufnahme eines Kabelbinders umfasst.

21. Schutzanordnung (10) nach einem der Ansprüche 3 bis 20, ferner umfassend einen drahtlos lesbaren Speicher (111), der so angeordnet ist, dass sich der drahtlos lesbare Speicher (111) in der zusammengebauten Konfiguration (100) zwischen der ersten und der zweiten Abdeckung (23, 63) befindet.

22. Schutzanordnung (10) nach einem der vorhergehenden Ansprüche, ferner umfassend eine optische Kennzeichnung (113), wobei sich die optische Kennzeichnung (113) auf einer Außenfläche der Abdeckung (23) befindet, die am weitesten vom offenen Ende (103) entfernt ist, sodass die optische Kennzeichnung (113) in der zusammengebauten Konfiguration (100) der Umgebung ausgesetzt ist.

23. Schutzanordnung (10) nach einem der vorhergehenden Ansprüche, wobei die erste Abdeckung (23) in Längsrichtung vom Ende der ersten sich in Längsrichtung erstreckenden Wand (21) beabstandet ist.

24. Schutzanordnung (310) zum Schutz eines am Ende eines Rohres (205) ausgebildeten Gewindes (201), wobei die Schutzanordnung (310) mindestens ein erstes Mantelelement (312) und ein zweites Mantelelement (316) umfasst, wobei:
das erste Mantelelement (312) eine erste sich in Längsrichtung erstreckende Wand (321) und eine erste Abdeckung (323) umfasst;
das zweite Mantelelement (316) eine zweite, sich in Längsrichtung erstreckende Wand (361) und eine zweite Abdeckung (363) umfasst; und
die Mantelelemente (312, 316) so konfiguriert sind, dass sie in einer zusammengebauten Konfiguration (400) zusammenwirken, um Folgendes zu bilden:
ein rohrförmiges Gehäuse (401) mit einem offenen Ende (403) und einem gegenüberliegenden geschlossenen Ende (405), wobei das rohrförmige Gehäuse (401) zum Umschließen des Gewindeendes des Rohrs (205) ausgelegt ist,
wobei sich die erste und die zweite Abdeckung (323, 363) so überlappen, dass eine Oberfläche der ersten Abdeckung (323, 363) einer Oberfläche der zweiten Abdeckung (363) zugewandt ist, wobei die erste Abdeckung (323) mit der ersten sich in Längsrichtung erstreckenden Wand (321) einstückig ausgebildet ist;
**dadurch gekennzeichnet, dass**
jedes Mantelelement (12, 16) einen Innengewindeabschnitt (27, 67) zum Eingriff mit dem Außengewinde (201) des Rohres (205) umfasst.

25. Schutzanordnung (310) nach Anspruch 24, wobei:
das abgedeckte Ende (405) von der ersten und zweiten Abdeckung (323, 363) abgedeckt ist;
die erste und die zweite Abdeckung (323, 363) sich an unterschiedlichen Längspositionen befinden; und
die erste und zweite Abdeckung (323, 363) ein dazwischenliegendes Fach (409) bilden, zur Aufnahme eines RFID-Tags.

26. Schutzanordnung (310) nach Anspruch 24 oder 25, wobei sich in der zusammengebauten Konfiguration (400) die erste Abdeckung (323) proximal zur zweiten sich in Längsrichtung erstreckenden Wand (361) erstreckt und die zweite Abdeckung (363) sich proximal zur ersten sich in Längsrichtung erstreckenden Wand (321) erstreckt.

27. Schutzanordnung (310) nach einem der Ansprüche 24 bis 26, wobei das erste Mantelelement (312) ferner ein Verschlusselement umfasst, das sich in Längsrichtung von der ersten Abdeckung (323) erstreckt, um das rohrförmige Gehäuse (401) zu verschließen.

28. Schutzanordnung (310) nach einem der Ansprüche 24 bis 27, wobei die Mantelelemente (312, 316) so konfiguriert sind, dass sie in der zusammengebauten Konfiguration (400) zusammenwirken, um einen ringförmigen Sitz (407) zum Eingriff mit dem Umfang des Rohres (205) zu bilden.

## Revendications

1. Ensemble de protection (10) destiné à protéger un filetage (201) formé à l'extrémité d'un tuyau (205), l'ensemble de protection (10) comprenant au moins un premier élément de coque (12) et un second élément de coque (16), dans lequel :
le premier élément de coque (12) comprend une première paroi s'étendant longitudinalement (21) et un premier couvercle (23) ;
le second élément de coque (16) comprend une seconde paroi s'étendant longitudinalement (61) ; et
les éléments de coque (12, 16) sont configurés pour coopérer dans une configuration assemblée (100) afin de former :
une enceinte tubulaire (101) présentant une extrémité ouverte (103) et une extrémité fermée opposée (105), l'enceinte tubulaire (101) étant agencée pour renfermer l'extrémité filetée (207) du tuyau (205),
dans lequel l'extrémité fermée (105) est fermée par la mise en butée du premier couvercle (23) avec la seconde paroi s'étendant longitudinalement (61),
dans lequel le premier couvercle (23) est formé d'un seul tenant avec la première paroi s'étendant longitudinalement (21) ;
**caractérisé en ce que** :
chaque élément de coque (12, 16) comprend une partie filetée interne (27, 67) destinée à une mise en prise du filetage externe (201) du tuyau (205).

2. Ensemble de protection (10) selon la revendication 1, dans lequel la seconde paroi s'étendant longitudinalement (61) comprend une première rainure (65) destinée à recevoir le premier couvercle (23).

3. Ensemble de protection selon la revendication 1 ou 2, dans lequel le second élément de coque (16) comprend un second couvercle (63) agencé pour venir en butée contre la première paroi s'étendant longitudinalement (21).

4. Ensemble de protection (10) selon la revendication 3, dans lequel la première paroi s'étendant longitudinalement (21) comprend une seconde rainure destinée à recevoir le second couvercle (63).

5. Ensemble de protection (10) selon la revendication 3 ou 4, dans lequel le second couvercle (63) est formé d'un seul tenant avec la seconde paroi s'étendant longitudinalement (61).

6. Ensemble de protection (10) selon l'une quelconque des revendications 3 à 5, dans lequel dans la configuration assemblée (100), les premier et second couvercles (23, 63) sont situés dans des positions longitudinales différentes de telle sorte qu'un compartiment (109) soit formé entre le premier couvercle (23) et le second couvercle (63).

7. Ensemble de protection (10) selon l'une quelconque des revendications 3 à 6, dans lequel dans la configuration assemblée (100), les premier et second couvercles (23, 63) sont espacés de 0 à 25 mm.

8. Ensemble de protection (10) selon l'une quelconque des revendications 2 à 7, dans lequel la première rainure (65) dans la seconde paroi s'étendant longitudinalement (61) et le premier couvercle (23) viennent en prise de manière à interférer dans la configuration assemblée (100).

9. Ensemble de protection (10) selon la revendication 8, lorsqu'elle dépend de la revendication 4, dans lequel la seconde rainure de la première paroi s'étendant longitudinalement (21) et le second couvercle (63) viennent en prise de manière à interférer dans la configuration assemblée (100).

10. Ensemble de protection (10) selon une quelconque revendication précédente, dans lequel la partie filetée interne (27, 67) comprend un filetage conique destiné à une mise en prise avec un filetage externe conique (201) du tuyau (205).

11. Ensemble de protection (10) selon une quelconque revendication précédente, dans lequel, dans la configuration assemblée (100), les parties filetées internes (27, 67) de chaque élément de coque (12, 16) forment collectivement un filetage hélicoïdal.

12. Ensemble de protection (10) selon une quelconque revendication précédente, dans lequel le premier élément de coque (12) comprend au moins une saillie et le second élément de coque (16) comprend au moins un évidement complémentaire dans lequel, dans la configuration assemblée (100), la saillie du premier élément de coque (12) pénètre, et vient en prise dans l'évidement du second élément de coque (16).

13. Ensemble de protection (10) selon une quelconque revendication précédente, dans lequel chaque élément de coque (12, 16) comprend au moins une saillie (69) et chaque élément de coque (16, 12) comprend au moins un évidement complémentaire (31) dans lequel, dans la configuration assemblée (100), les projections (69) de chaque élément de coque (12, 16) viennent en prise dans l'évidement (31) de l'élément de coque correspondant (16, 12).

14. Ensemble de protection (10) selon une quelconque revendication précédente, dans lequel un certain des éléments de coque (12, 16) comprend une bride (33) le long d'au moins un bord de sa paroi s'étendant longitudinalement (21, 61) et l'autre des éléments de coque (16, 12) comprend un épaulement (73) le long d'au moins un bord de sa paroi s'étendant longitudinalement (61, 21) de telle sorte que dans la configuration assemblée (100), la bride (33) vient en butée contre l'épaulement (73).

15. Ensemble de protection (10) selon une quelconque revendication précédente, dans lequel la paroi longitudinale (21, 61) de chaque élément de coque (12, 16) comprend un corps creux à section transversale arquée, de telle sorte que dans la configuration assemblée (100), l'enceinte tubulaire (101) soit cylindrique et/ou tronconique.

16. Ensemble de protection (10) selon une quelconque revendication précédente, dans lequel les éléments de coque (12, 16) sont configurés pour coopérer dans une configuration assemblée (100) afin de former un siège annulaire (107) destiné à une mise en prise avec la circonférence du tuyau (205).

17. Ensemble de protection (10) selon la revendication 16 lorsqu'elle dépend de la revendication 15, dans lequel les surfaces intérieures des corps creux semi-circulaires de chaque élément de coque (12, 16) coopèrent dans la configuration assemblée (100) pour former le siège annulaire (107).

18. Ensemble de protection (10) selon l'une quelconque des revendications 2 à 17, dans lequel le premier couvercle (23) présente une section transversale circulaire et la première rainure (65) du second élément de coque (16) est une rainure en forme d'arc.

19. Ensemble de protection (10) selon la revendication 18 lorsqu'elle dépend de la revendication 4, dans lequel les premier et second couvercles (23, 63) présentent chacun une section transversale circulaire et les première et seconde rainures (65) sont chacune une rainure en forme d'arc complémentaire au couvercle associé (63, 23) de l'élément de coque opposé (16, 12).

20. Ensemble de protection (10) selon une quelconque revendication précédente, dans lequel chaque élément de coque (12, 16) comprend une rainure externe (35, 75) dans une surface extérieure (37, 77) opposée à l'enceinte tubulaire (101) pour recevoir un serre-câble.

21. L'ensemble de protection (10) de l'une quelconque des revendications 3 à 20, comprenant en outre une mémoire lisible sans fil (111) située de telle sorte que, dans la configuration assemblée (100), la mémoire lisible sans fil (111) soit disposée entre le premier et le deuxième couvercle (23, 63).

22. Ensemble de protection (10) selon une quelconque revendication précédente, comprenant en outre un indice visuel (113), l'indice visuel (113) étant situé sur une surface extérieure du couvercle (23) qui est la plus éloignée de l'extrémité ouverte (103) de telle sorte que dans la configuration assemblée (100), l'indice visuel (113) soit exposé à l'environnement.

23. Ensemble de protection (10) selon une quelconque revendication précédente, dans lequel le premier couvercle (23) est espacé longitudinalement de l'extrémité de la première paroi s'étendant longitudinalement (21).

24. Ensemble de protection (310) destiné à protéger un filetage (201) formé à l'extrémité d'un tuyau (205), l'ensemble de protection (310) comprenant au moins un premier élément de coque (312) et un second élément de coque (316), dans lequel :
le premier élément de coque (312) comprend une première paroi s'étendant longitudinalement (321) et un premier couvercle (323) ;
le second élément de coque (316) comprend une seconde paroi s'étendant longitudinalement (361) et un second couvercle (363) ; et
les éléments de coque (312, 316) sont configurés pour coopérer dans une configuration assemblée (400) afin de former :
une enceinte tubulaire (401) présentant une extrémité ouverte (403) et une extrémité couverte opposée (405), l'enceinte tubulaire (401) étant agencée pour renfermer l'extrémité filetée du tuyau (205),
dans lequel les premier et second couvercles (323, 363) se chevauchent de telle sorte qu'une surface du premier couvercle (323, 363) soit face à une surface du second couvercle (363), dans lequel le premier couvercle (323) est formé d'un seul tenant avec la première paroi s'étendant longitudinalement (321) ;
**caractérisé en ce que**
chaque élément de coque (12, 16) comprend une partie filetée interne (27, 67) destinée à une mise en prise avec le filetage externe (201) du tuyau (205).

25. Ensemble de protection (310) selon la revendication 24, dans lequel :
l'extrémité couverte (405) est couverte par les premier et second couvercles (323, 363) ;
les première et second couvercle (323, 363) sont dans des positions longitudinales différentes ; et
les premier et second couvercles (323, 363) forment un compartiment (409) entre ceux-ci pour contenir une étiquette RFID.

26. Ensemble de protection (310) selon la revendication 24 ou la revendication 25, dans lequel dans la configuration assemblée (400), le premier couvercle (323) s'étend de manière proximale par rapport à la seconde paroi s'étendant longitudinalement (361) et le second couvercle (363) s'étend de manière proximale par rapport à la première paroi s'étendant longitudinalement (321).

27. Ensemble de protection (310) selon l'une quelconque des revendications 24 à 26, dans lequel le premier élément de coque (312) comprend en outre un élément d'enceinte s'étendant longitudinalement à partir du premier couvercle (323) pour fermer l'enceinte tubulaire (401).

28. Ensemble de protection (310) selon l'une quelconque des revendications 24 à 27, dans lequel les éléments de coque (312, 316) sont configurés pour coopérer dans la configuration assemblée (400) afin de former un siège annulaire (407) destiné à une mise en prise avec la circonférence du tuyau (205).
